# EUROPÄISCHE PATENTSCHRIFT

(11) **EP 0 570 919 B1**
(45) Veröffentlichungstag und Bekanntmachung des Hinweises auf die Patenterteilung: **13.12.1995**
(21) Anmeldenummer: 93108103.8
(22) Anmeldetag: 18.05.1993
(51) Int. Cl.: F02M 31/135

(54) **Einrichtung zum Beheizen eines Kraftstoff-Luft-Gemisches einer Brennkraftmaschine mit Kraftstoffeinspritzung**
Device for heating a fuel-air-mixture of an internal combustion engine with fuel injection
Dispositif pour chauffer un mélange air-carburant d'un moteur à combustion interne avec injection de carburant

(30) Priorität: 18.05.1992 DE 4216384
(43) Veröffentlichungstag der Anmeldung: 24.11.1993
(73) Patentinhaber: DODUCO GMBH + Co Dr. Eugen Dürrwächter, 75172 Pforzheim (DE)
(72) Erfinder: Kaspar, Franz, Dr. Dipl.-Phys., W-7532 Niefern-Öschelbronn (DE); Kühnle, Andreas, W-7134 Knittlingen 2 (DE); Normann, Norbert, Dr. Dipl.-Phys., W-7532 Niefern-Öschelbronn (DE); Schulze, Gunter Lothar, Dipl.-Ing., W-7536 Ispringen (DE)
(74) Vertreter: Twelmeier, Ulrich, Dipl.Phys.

(56) Entgegenhaltungen:
- EP-A- 0 343 652
- EP-A- 0 472 416
- DE-A- 2 843 534

## Beschreibung

Die Erfindung geht aus von einer Einrichtung mit den im Oberbegriff des Anspruchs 1 angegebenen Merkmalen. Eine solche Einrichtung ist aus der DE-34 26 469 C2 und aus der EP 0 343 652 A1 bekannt. Bei den bekannten Einrichtungen befindet sich ein Einsatz mit einem elektrischen Heizelement im Ansaugkanal des Zylinderkopfs. Vom Heizelement führen elektrische Leitungen zu einem ausserhalb des Zylinderkopfs liegenden Kontaktelement. Die Einsätze sind Hohlkörper, z.B. Hohlzylinder (EP 0 343 652 A1) oder Kegel (DE-34 26 469 C2), die in den Einlaßkanal des Zylinderkopfes eingeführt und mit einem Flansch fixiert werden, der zwischen dem Zylinderkopf und dem Ansaugrohr eingespannt wird. In beiden Fällen werden besondere Durchbrüche im Zylinderkopf oder im Ansaugrohr oder ein besonderer Flansch zwischen dem Zylinderkopf und dem Ansaugrohr zur Montage benötigt.

Der vorliegenden Erfindung liegt die Aufgabe zugrunde, eine Einrichtung der genannten Art so zu verbessern, dass sie mit weniger Aufwand als bisher montiert werden kann.

Diese Aufgabe wird gelöst durch eine Einrichtung mit den im Anspruch 1 angegebenen Merkmalen. Vorteilhafte Weiterbildungen der Erfindung sind Gegenstand der abhängigen Ansprüche.

Der erfindungsgemässe Einsatz hat einen Fortsatz, welcher sich in den Durchgang der Wandung des Ansaugrohrs erstreckt, welcher zur Aufnahme der Einspritzdüse für den jeweiligen Zylinder vorgesehen ist. Dieser Fortsatz trägt das wenigstens eine Kontaktelement bzw. die Kontaktelemente, die für die Stromversorgung des Heizelementes im Einsatz benötigt werden, und dieses Kontaktelement ist so angeordnet, dass es von aussen zugänglich ist. Auf diese Weise übernimmt der Durchgang durch die Wand des Ansaugrohrs eine dreifache Aufgabe: Wie bisher dient er der Aufnahme und Halterung der Einspritzdüse; neu und erfinderisch ist, dass er darüberhinaus auch dazu dient, den Einsatz zur Beheizung des Kraftstoff-Luft-Gemisches zu halten und die Leitung(en) für die Stromversorgung des Heizelementes des Einsatzes aufzunehmen. Der Vorteil dieser Anordnung liegt darin, dass die Montage der Einrichtung keine konstruktiven Änderungen am Zylinderkopf erfordert und daß keine besonderen Teile zwischen dem Ansaugrohr und dem Ansaugkanal des Zylinderkopfs benötigt werden, der Anschluß des Ansaugrohres an dem Zylinderkopf vielmehr gerade so erfolgen kann wie bei einem Motor ohne eine Einrichtung zur Beheizung des Kraftstoff-Luft-Gemisches.

Der Fortsatz der Heizeinrichtung, welcher sich in den Durchgang im Ansaugrohr erstreckt, könnte ein Steg sein, welcher in einer entsprechend angepaßten Längsausnehmung der Wand des Durchganges liegt. Vorzugsweise ist der Fortsatz jedoch eine Hülse, deren Kontur der Kontur des Durchgangs angepaßt ist und ihrerseits zur Aufnahme der Einspritzdüse dient. Das erleichtert zum einen die Fixierung sowohl des Einsatzes als auch der Einspritzdüse und erleichtert andererseits die Abdichtung des Durchgangs.

Da der Fortsatz die erforderlichen elektrischen Kontaktelemente tragen soll, besteht er zweckmässigerweise aus elektrisch isolierendem Werkstoff (ein harter Kunststoff oder eine Keramik), in welchen die Zuleitung bzw. die Zuleitungen zum Heizelement unmittelbar eingebettet sind. In diesem Fall ist die Wand hinreichend dick zu bemessen, um die Zuleitung(en) isoliert führen zu können.

Grundsätzlich genügt es, eine einzige Leitung durch den Durchgang im Ansaugrohr nach aussen zu führen, denn die zweite Zuleitung zum Heizelement kann auf kurzem Wege noch im Ansaugkanal des Zylinderkopfs oder im Ansaugrohr oder zwischen den beiden enden und eine elektrisch leitende Verbindung mit dem Motorblock herstellen (Masseanschluß). So kann man z.B. eines der beiden Kontaktelemente, welche auf der Aussenseite des Fortsatzes angeordnet sind, ausserhalb des Durchgangs vorsehen und das andere Kontaktelement, welches als Massekontakt dient, im Durchgang liegend anordnen, so dass es der Wand des Ansaugrohrs anliegt.

Vorzugsweise ist nicht nur der im Durchgang der Ansaugrohrwand liegende Fortsatz hülsenförmig ausgebildet, sondern hat der Fortsatz auch einen im Ansaugquerschnitt des Ansaugrohrs liegenden ringförmigen Abschnitt, weil das die Montage und Fixierung des Einsatzes erleichtert. Damit durch diesen ringförmigen Abschnitt der wirksame Ansaugquerschnitt des Ansaugrohrs nicht verkleinert wird, liegt der ringförmige Abschnitt vorzugsweise in einer dafür vorgesehenen Erweiterung des Ansaugrohres. Diese Erweiterung schließt zweckmässigerweise unmittelbar an den Ansaugkanal im Zylinderkopf an, was zum einen das Einfügen des Einsatzes in das Ansaugrohr erleichtert und andererseits eine Fixierung des Einsatzes zwischen Ansaugrohr und Ansaugkanal im Zylinderkopf erleichtert, insbesondere wenn der Fortsatz zu diesem Zweck noch einen aussen am Zylinderkopf anliegenden Anschlag hat, wobei es ausreicht, dass das eine kleine Nase ist, die in einer entsprechenden kleinen Ausnehmung am Ende des Ansaugrohrs liegt.

Um den elektrischen Anschluß herzustellen, läßt man den Fortsatz, insbesondere wenn er hülsenförmig ist, aus dem Durchgang nach aussen ragen, so dass die Kontaktelemente freiliegen. Bei hülsenförmigem Fortsatz fixiert man diesen am einfachsten durch eine Halteklammer. In vorteilhafter Weiterbildung der Erfindung kann diese zugleich als Stromübertrager mit elektrischen Kontaktelementen ausgebildet sein. Sie ist dann am besten auf der Hülse drehbar angeordnet, wobei die Kontaktelemente an der Halteklammer und/oder jene auf der Hülse segmentförmig oder ringförmig ausgebildet sind, um unabhängig von der Drehlage der Halteklammer eine elektrische Kontaktgabe zu ermöglichen.

Ein Ausführungsbeispiel der Erfindung ist schematisch in den beigefügten Zeichnungen dargestellt.

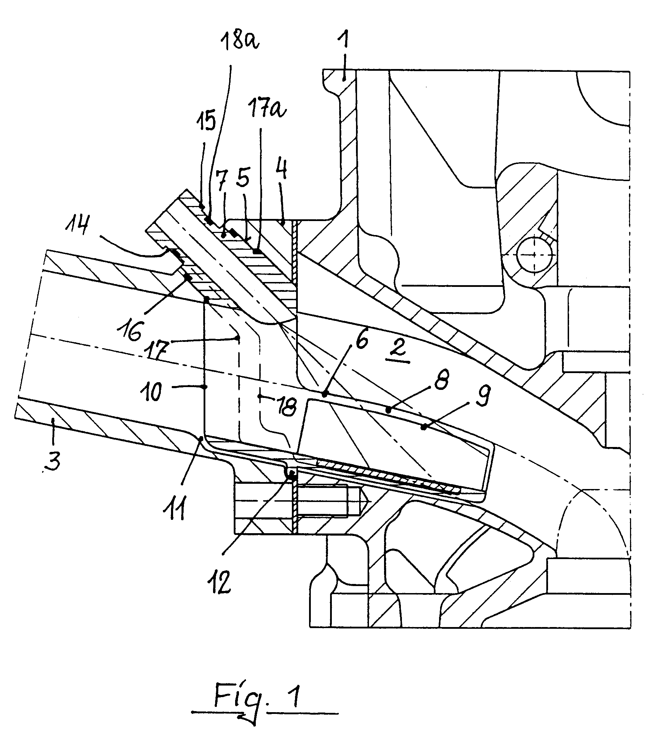

- Figur 1: zeigt einen Vertikalschnitt durch einen Teil eines Zylinderkopfes einer Brennkraftmaschine mit Ansaugkanal und angeflanschtem Ansaugrohr,
- Figur 2: zeigt vergrößert in einer Schrägansicht einen Einsatz für die Gemischbeheizung, und
- Figur 3: zeigt in einer Schrägansicht eine Klammer zum Fixieren des Fortsatzes des Einsatzes aus Figur 2 im Durchgang in der Wand des Ansaugrohrs.

Der Zylinderkopf 1 hat einen Ansaugkanal 2, durch den ein Kraftstoff-Luft-Gemisch in einen Zylinder der zugehörigen Brennkraftmaschine angesaugt wird. An den Zylinderkopf 1 ist ein Ansaugrohr 3 angeflanscht, durch welches die für die Verbrennung benötigte Luft angesaugt wird. Schräg zum Verlauf des Ansaugrohrs 3 befindet sich im Flansch 4 des Ansaugrohrs ein Durchgang 5. Ein Einsatz 6 zum Beheizen des Kraftstoff-Luft-Gemisches erstreckt sich mit einem hülsenförmigen Fortsatz 7 durch den Durchgang 5 hindurch. Der Einsatz 6 besteht aus einem harten, wärmebeständigen Kunststoff und trägt an seinem in der Flucht des Fortsatzes 7 liegenden Abschnitt 8 ein elektrisches Heizelement 9, z.B. einen Widerstand mit positivem Temperaturkoeffizienten (PTC-Widerstand). Der im Ansaugkanal 2 liegende Abschnitt 8 des Einsatzes liegt mit geringem Abstand vor der Wand des Ansaugkanals 2, so dass die vom Heizelement 9 erzeugte Wärme nicht unmittelbar in den metallischen Zylinderkopf 1 abfließen kann.

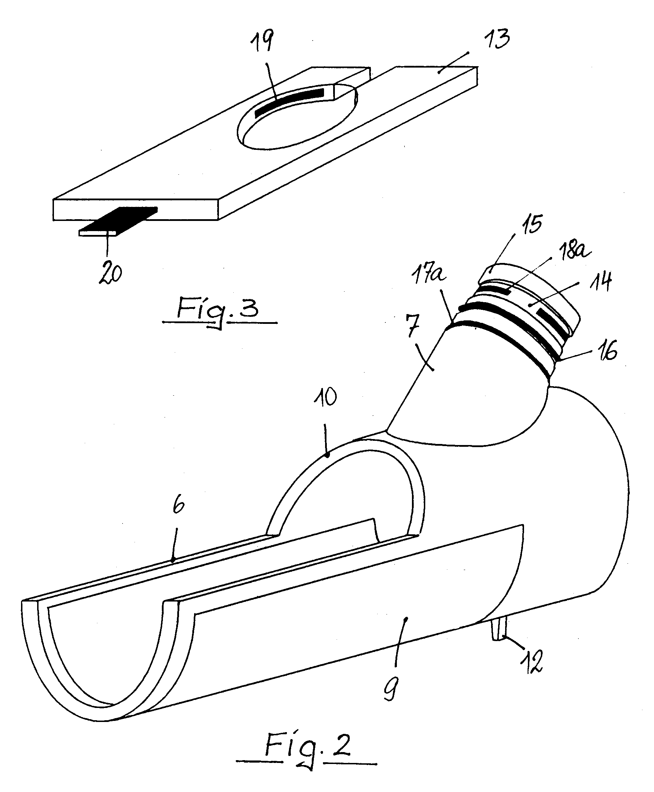

Eine lagemässige Fixierung des Einsatzes 6 wird durch mehrere Maßnahmen erreicht: Zum einen durch einen ringförmigen Abschnitt 10, der am Ende des Ansaugrohres 3 im Bereich von dessen Flansch 4 liegt. Damit durch den ringförmigen Abschnitt 10 der wirksame Ansaugquerschnitt des Ansaugrohrs 3 nicht verkleinert wird, liegt die Wand des ringförmigen Abschnitts 10 in einer Ausnehmung 11 der Wand bzw. des Flansches des Ansaugrohrs 3. Dem Fortsatz 7 diametral gegenüberliegend hat der Einsatz 6 eine kleine Nase 12, welche in einer dafür vorgesehenen kleinen Ausnehmung des Flansches 4 zwischen diesem und dem Zylinderkopf 1 liegt. Zur Fixierung des Einsatzes 6 dient ferner die formschlüssige Einführung des Fortsatzes 7 in den Durchgang 5, in welchem der Fortsatz 7 durch eine Klammer 13 (Figur 3) festgelegt ist, welche einen Hals 14 des Fortsatzes 7, welcher über den Durchgang 5 nach aussen vorsteht, federnd umschließt und gegen ein Abziehen in Längsrichtung des Fortsatzes 7 durch einen Kragen 15 gesichert ist.

Um den Durchgang 5 abzudichten, liegt zwischen einer Schulter des Durchgangs und einer Gegenschulter des Fortsatzes 7 ein O-Ring 16.

Zwei elektrische Leitungen 17 und 18 verlaufen innerhalb des Einsatzes 6 vom Heizelement 9 bis in den Fortsatz 7 hinein. Die Leitung 17 tritt im Bereich einer Fase des Fortsatzes 8 nach aussen und bildet dort ein ringförmiges Kontaktelement 17a, durch welches ein Massekontakt zum Flansch 4 hergestellt wird. Die zweite Leitung 18 tritt im Bereich des Halses 14 nach aussen und bildet dort ein C-förmiges Kontaktelement 18a, welches Kontakt macht mit einem segmentförmigen Kontaktelement 19 in der Klammer 13. Vom Kontaktelement 19 führt eine elektrische Leitung im Innern der Klammer 13 zu einer Kontaktfahne 20, auf welche ein elektrischer Stecker aufgesteckt werden kann.

Der Einsatz 6 wird montiert, indem in das noch nicht am Zylinderkopf 1 angeflanschte Ansaugrohr 3 der Einsatz 6 eingefügt wird, so dass der Fortsatz 7 im Durchgang 5 und die Nase 12 in der dafür vorgesehenen Ausnehmung liegen. In dieser Lage wird der Einsatz 6 durch Aufschieben der Klammer 13 fixiert. Dann wird das Ansaugrohr 3 dem Zylinderkopf angenähert, so dass der Abschnitt 8 des Einsatzes in den Ansaugkanal 2 gelangt. Schließlich wird der Flansch 4 mit dem Zylinderkopf 1 verschraubt und die Steckverbindung zur Kontaktfahne 20 hergestellt. Der hülsenförmige Fortsatz 7 nimmt eine nicht dargestellte, herkömmliche Einspritzdüse auf, deren Strahl gegen das Heizelement 9 gerichtet ist.

## Patentansprüche

1. Einrichtung zum Beheizen eines Kraftstoff-Luft-Gemisches einer Brennkraftmaschine mit Kraftstoffeinspritzung,
mit einem im Ansaugkanal (2) des Zylinderkopfs (1) der Maschine angeordneten Einsatz (6) mit einem elektrischen Heizelement (9) und mit wenigstens einer elektrischen Leitung (18), welche vom Heizelement (9) zu einem ausserhalb des Zylinderkopfs (1) liegenden Kontaktelement (18a) führt,
und mit einem in den Ansaugkanal (2) mündenden Ansaugrohr (3), dessen Wandung einen Durchgang (5) hat, in welchen eine in den Ansaugkanal (2) gegen das Heizelement (9) gerichtete Einspritzdüse einsetzbar ist, **dadurch gekennzeichnet**, dass der Einsatz (6) einen sich in den Durchgang (5) erstreckenden Fortsatz (7) hat, welcher das von aussen zugängliche Kontaktelement (18a) trägt.

2. Einrichtung nach Anspruch 1, **dadurch gekennzeichnet**, dass der Fortsatz (7) eine Hülse ist.

3. Einrichtung nach Anspruch 2, **dadurch gekennzeichnet**, dass die Hülse (7) unmittelbar eine Fassung für die Einspritzdüse ist.

4. Einrichtung nach einem der vorstehenden Ansprüche, **dadurch gekennzeichnet**, dass der Fortsatz (7) aus elektrisch isolierendem Werkstoff besteht.

5. Einrichtung nach einem der vorstehenden Ansprüche, **dadurch gekennzeichnet**, dass zwei Kontaktelemente (17a, 18a) vorgesehen sind, welche beide auf der Aussenseite des Fortsatzes (7) angeordnet sind, und dass eines der Kontaktelemente (17a) als Massekontakt dient und an der Wand des Ansaugrohrs (3) oder unmittelbar an der Wand des Ansaugkanals (2) anliegt.

6. Einrichtung nach einem der vorstehenden Ansprüche, **dadurch gekennzeichnet**, dass der Fortsatz (7) einen im Ansaugquerschnitt des Ansaugrohrs (3) liegenden ringförmigen Abschnitt (10) hat.

7. Einrichtung nach Anspruch 6, **dadurch gekennzeichnet**, dass der ringförmige Abschnitt (10) in einer Erweiterung (11) des Ansaugrohrs (3) liegt, so dass dessen wirksamer Ansaugquerschnitt dadurch nicht verkleinert wird.

8. Einrichtung nach Anspruch 7, **dadurch gekennzeichnet**, dass die Erweiterung (11) des Ansaugrohrs (3) unmittelbar an den Ansaugkanal (2) anschließt und der Fortsatz (7) einen aussen am Zylinderkopf (1) anliegenden Anschlag (12) hat.

9. Einrichtung nach einem der Ansprüche 2 bis 8, **dadurch gekennzeichnet**, dass die Hülse (7) aus dem Durchgang (5) nach aussen ragt und auf ihrem äusseren Abschnitt eine Halteklammer (13) trägt, durch welche die Hülse (7) im Durchgang (5) gehalten ist.

10. Einrichtung nach Anspruch 9, **dadurch gekennzeichnet**, dass die Halteklammer (13) auf der Hülse (7) drehbar ist.

11. Einrichtung nach Anspruch 9 oder 10, **dadurch gekennzeichnet**, dass die Halteklammer (13) als Stromübertrager mit wenigstens einem elektrischen Kontaktelement (19) ausgebildet ist.

## Claims

1. A device for the heating of a fuel-air mixture of an internal combustion engine with fuel injection,
with an insert (6) with an electrical heating element (9) arranged in the intake port (2) of the cylinder head (1) of the engine, and with at least one electrical cable (18), which leads from the heating element (9) to a contact element (18a) situated outside the cylinder head (1),
and with an intake pipe (3) opening into the intake port (2), the wall of which pipe has a passage (5), into which an injection nozzle, directed into the intake port (2) towards the heating element (9), can be inserted, **characterised in that** the insert (6) has an extension (7) extending into the passage (5), which extension supports the contact element (18a) accessible from outside.

2. A device as claimed in claim 1, **characterised in that** the extension (7) is a sleeve.

3. A device as claimed in claim 2, **characterised in that** the sleeve (7) is directly a mounting for the injection nozzle.

4. A device as claimed in one of the preceding claims, **characterised in that** the extension (7) is composed of electrically insulating material.

5. A device as claimed in one of the preceding claims, **characterised in that** two contact elements (17a, 18a) are provided, both of which are arranged on the outside of the extension (7), and that one of the contact elements (17a) serves as earth contact and bears on the wall of the intake pipe (3) or directly on the wall of the intake port (2).

6. A device as claimed in one of the preceding claims, **characterised in that** the extension (7) has an annular section (10) situated in the intake cross-section of the intake pipe (3).

7. A device as claimed in claim 6, **characterised in that** the annular section (10) is situated in a widening (11) of the intake pipe (3), so that its effective intake cross-section is thereby not reduced.

8. A device as claimed in claim 7, **characterised in that** the widening (11) of the intake pipe (3) directly adjoins the intake port (2) and the extension (7) has a stop (12) bearing on the outside of the cylinder head (1).

9. A device as claimed in one of claims 2 to 8**, characterised in that** the sleeve (7) projects outwards from the passage (5) and on its outer section supports a retaining clip (13), by means of which the sleeve (7) is held in the passage (5).

10. A device as claimed in claim 9, **characterised in that** the retaining clip (13) is rotatable on the sleeve (7).

11. A device as claimed in claim 9 or 10, **characterised in that** the retaining clip (13) is designed as current transmitter with at least one electrical contact element (19).

## Revendications

1. Dispositif pour le chauffage de mélange carburant-air d'un moteur à combustion interne équipé d'un système à injection de carburant, comportant un insert (6) muni d'un élément chauffant électrique (9) disposé dans le canal d'aspiration (2) de la culasse (1) du moteur, et comportant au moins une conduite électrique qui conduit de l'élément chauffant (9) vers un élément de contact (18a) situé à l'extérieur de la culasse (1),
et comportant, débouchant dans le canal d'aspiration (2), un tube d'aspiration (3) dont la paroi présente un passage (5) dans lequel peut être inséré un gicleur orienté en direction de l'élément chauffant (9) dans le canal d'aspiration (2), caractérisé en ce que l'insert (6) présente un prolongement (7) qui s'étend dans le passage (5) et qui supporte l'élément de contact (18a) accessible de l'extérieur.

2. Dispositif selon la revendication 1, caractérisé en ce que le prolongement (7) est une douille.

3. Dispositif selon la revendication 2, caractérisé en ce que la douille (7) constitue, sans aucun intermédiaire, la monture du gicleur.

4. Dispositif selon l'une des revendications précédentes, caractérisé en ce que la prolongement (7) est constitué en un matériau électriquement isolant.

5. Dispositif selon l'une des revendications précédentes, caractérisé en ce que deux éléments de contact (17a, 18a) sont prévus, lesquels sont disposés tous deux sur le côté extérieur di prolongement (7) et un ce que l'un des éléments de contact (17a) sert de contact de masse et s'applique sur la paroi du tube d'aspiration (3) ou directement sur la paroi du canal d'aspiration (2).

6. Dispositif selon l'une des revendications précédentes, caractérisé en ce que le prolongement (7) présente une section (10) de forme circulaire située à l'intérieur de la section aspirante du tube d'aspiration (3).

7. Dispositif selon la revendication 6, caractérisé en ce que le positionnement de la section de forme circulaire (10), à l'intérieur de l'élargissement (11) du tube d'aspiration (3), est tel qu'il n'entraîne aucune réduction de la section aspirante active.

8. Dispositif selon la revendication 7, caractérisé en ce que l'élargissement (11) du tube d'aspiration (3) fait suite directement au canal d'aspiration (2) et que le prolongement (7) présente use butée (12) s'appliquant de l'extérieur sur la culasse (1).

9. Dispositif selon l'une des revendications 2 à 8, caractérisé en ce que la douille (7) fait saillie vers l'extérieur du passage (5) et supporte sur sa section externe une agrafe de retenue (13) au moyen de laquelle ladite douille (7) est maintenue à l'intérieur du passage (5).

10. Dispositif selon la revendication 9, caractérisé en ce que l'agrafe de retenue (13) peut tourner sur la douille (7).

11. Dispositif selon la revendication 9 ou 10, caractérisé en ce que l'agrafe de retenue (13) est réalisée sous la forme d'un transmetteur de courant comportant au moins un élément de contact électrique (19).
